# EUROPÄISCHE PATENTSCHRIFT

(11) **EP 1 777 711 B1**
(45) Veröffentlichungstag und Bekanntmachung des Hinweises auf die Patenterteilung: **29.05.2013**
(21) Anmeldenummer: 06021374.1
(22) Anmeldetag: 12.10.2006
(51) Int. Cl.: G21D 1/00, G21F 9/30

(54) **Verfahren und Vorrichtung zum Zerlegen eines Einbauteiles eines Kernreaktordruckbehälters**
Method and Device for dismantling an internal component of a nuclear reactor pressure vessel
Procédé et dispositif de démantèlement des équipements internes d'une cuve à pression d'un réacteur nucléaire

(30) Priorität: 21.10.2005 DE 102005050942
(43) Veröffentlichungstag der Anmeldung: 25.04.2007
(73) Patentinhaber: AREVA GmbH, 91052 Erlangen (DE)
(72) Erfinder: Strobel, Reinhardt, 90471 Nürnberg (DE); Loock, Ralf, 91083 Baiersdorf (DE); Käufl, Theo, 92318 Neumarkt (DE); Dippel, Bruno, 91099 Poxdorf (DE); Forster, Josef, 96114 Hirschaid (DE)
(74) Vertreter: Meissner, Bolte & Partner

(56) Entgegenhaltungen:
- DE-A1- 4 428 501
- DE-A1- 19 806 278
- DE-C1- 4 445 171
- JP-A- 8 075 892
- US-A- 5 263 062
- US-A1- 2003 156 676

## Beschreibung

Die Erfindung bezieht sich auf ein Verfahren und eine Vorrichtung zum Zerlegen eines Einbauteiles eines Kernreaktordruckbehälters.

Beim Rückbau eines Kernkraftwerkes ist es erforderlich, radioaktiv kontaminierte Anlagenteile vor deren Abtransport in geeignete Endlagerstätten zu zerlegen. Zum Zerlegen sperriger Teile von Einbauten eines Druckbehälters wird beispielsweise in der DE 44 45 171 C2 vorgeschlagen, diese aus dem Druckbehälter zu entnehmen und in einem separaten Zerlegebehälter einzusehen, indem sie mit einem auf den oberen Rand des Zerlegebehälters abgesetzten Zerlegemanipulator zerlegt werden.

Als besonders zweckmäßig hat sich ein beispielsweise aus der DE 44 28 501 A1 bekanntes Konzept erwiesen, bei dem das Zerlegen und Demontieren von Einbauteilen eines Anlagenteils "in situ", d.h. unmittelbar am Einbauort des Anlagenteils im Kernkraftwerk erfolgt. Dabei werden große Komponenten oder Einbauteile durch geeignete Trenntechniken in kleine, für den Transport geeignete Teile zerlegt. Aus der DE 198 06 278 A1 ist es darüber hinaus bekannt, als Trenntechnik ein sogenanntes Wasser-Abrasiv-Suspensions-Strahlverfahren einzusetzen, bei dem ein Abrasivmaterial einem Hochdruckwasserstrom zugemischt wird, der durch eine Düse gegen ein zu zertrennendes Bauteil gerichtet wird und dieses zerschneidet. Das Zerlegen und Zertrennen radioaktiv kontaminierter Anlagenteile muss aus Strahlenschutzgründen unter Wasser erfolgen.

Beim Zerlegen mit dem Wasser-Abrasiv-Suspensions-Strahlverfahren treten jedoch Wassertrübungen auf, die nur mit aufwändiger Reinigungstechnik zu beseitigen sind. Wird dieses Verfahren im Inneren von gefluteten Großkomponenten, beispielsweise im Inneren eines Kernreaktordruckbehälters eines Siedewasserreaktors durchgeführt, fallen große Mengen an verunreinigtem Wasser an, im Beispiel etwa 700 m³, die während des Zerlegens zu reinigen sind, um bei einer Wassertiefe im zweistelligen Meterbereich noch ausreichende Sichtbedingungen zu ermöglichen.

In der US 5,263,062 wird daher vorgeschlagen, bei einem "insitu"-Verfahren ein Sägeverfahren einzusetzen und beispielsweise den Kernmantel innerhalb des Druckbehälters in zylindrische Teilstücke zu zersägen und diese anschließend in einer außerhalb des Druckbehälters angeordneten Presse weiter zu kompaktieren.

Der Erfindung liegt nun die Aufgabe zugrunde, ein Verfahren zum Zerlegen eines Einbauteiles eines Kernreaktordruckbehälters anzugeben, das eine sichere Durchführung des Zerlegevorgangs ermöglicht. Außerdem liegt der Erfindung die Aufgabe zugrunde, eine Vorrichtung zum Durchführen des Verfahrens anzugeben.

Hinsichtlich des Verfahrens wird die Aufgabe gemäß der Erfindung gelöst mit einem Verfahren mit den Merkmalen des Patentanspruches 1. Gemäß diesen Merkmalen wird ein im Kernreaktordruckbehälter eingebautes Einbauteil im eingebauten Zustand innerhalb des geöffneten und bis zu seiner Oberkante gefluteten Kernreaktordruckbehälters durch ein mechanisches Trennverfahren unter Wasser zertrennt, wobei die innerhalb des Kernreaktordruckbehälters durchgeführten Zerlegearbeiten ausgehend von einer auf den Kernreaktordruckbehälter abgesetzten begehbaren Arbeitsbühne gesteuert und überwacht werden.

Durch den Einsatz eines mechanischen Trennverfahrens, bei dem es sich um ein Schneidverfahren, beispielsweise Rollschneiden, oder um ein spanabhebendes Verfahren handeln kann, treten verfahrensbedingt keine Wassertrübungen auf, da entweder kein Materialabtrag stattfindet, oder aber bei einem spanabhebenden Verfahren ein grober Materialabtrag in Form von Spänen auftritt, der zu Boden sinkt und nicht zu einer Trübung des Wassers führt. Das Verfahren ist insbesondere geeignet zum Zerlegen von großvolumigen Einbauteilen oder von Einbauteilen, die nicht oder nur mit sehr hohem Aufwand ausgebaut werden können, weil sie entweder mit dem Kernreaktordruckbehälter verschweißt oder über nur schwer zugängliche mechanische Verbindungen mit ihm verbunden sind. Da außerdem die Zerlegearbeiten ausgehend von einer auf den Kernreaktordruckbehälter abgesetzten begehbaren Arbeitsbühne gesteuert und überwacht werden, ist deren sichere und schnelle Durchführung ermöglicht.

Wenn das mechanische Trennverfahren ein Sägeverfahren ist, beispielsweise Bandsägen oder Stichsägen, können mit hohen Prozessgeschwindigkeiten auch dickwandige Einbauteile zertrennt werden.

In einer bevorzugten Ausgestaltung des Verfahrens werden die vom Einbauteil abgetrennten Teile im Kernreaktordruckbehälter mit einem mechanischen Trennverfahren nachzerlegt.

Wenn zumindest ein Teil der ausbaubar im Kernreaktordruckbehälter eingebauten Einbauteile ausgebaut werden und in einem außerhalb des Kernreaktordruckbehälters befindlichen Zerlegebehälter unter Wasser zertrennt werden, ist aufgrund des kleineren Volumens des Zerlegebehälters und damit der geringen Wassermenge und Wassertiefe auch das Zerlegen mit Verfahren möglich, die zu einer Trübung des Wassers führen. Insbesondere ist es dann möglich, diese ausgebauten Einbauteile mit einem Wasser-Abrasiv-Suspensions-Verfahren zu zertrennen.

In einer vorteilhaften Ausgestaltung des Verfahrens wird bei einem Kernreaktordruckbehälter eines Siedewasserreaktors nach dem Ausbau eines Kerndeckels und einer oberen und unteren Kerngitterplatte in den Kernreaktordruckbehälter eine Zerlegevorrichtung eingebracht, die einen Tragmast umfasst, der sich zumindest mittelbar am Boden des Kernreaktordruckbehälters abstützt, und an dem axial verschiebbar ein um die Längsachse des Tragmastes drehbar gelagerter Geräteträger angeordnet ist, der sich an einem Kernmantel radial abstützt und wenigstens ein erstes mechanisches Trennwerkzeug trägt. Die Nachzerlegung der vom Einbauteil abgetrennten Teile erfolgt vorzugsweise in einer in den Kernreaktordruckbehälter oberhalb des Kernbereichs unter Wasser eingebrachten Arbeitsstation mit zumindest einem zweiten mechanischen Trennwerkzeug.

Der Abtransport und die Endlagerung der abgetrennten und gegebenenfalls nachzerlegten Teile wird zusätzlich erleichtert, wenn diese in der Arbeitsstation außerdem kompaktiert werden.

In einer bevorzugten Ausgestaltung der Erfindung werden die abgetrennten, gegebenenfalls nachzerlegten und kompaktierten Teile in der Arbeitstation insbesondere in Lagerfässer eingebracht und in der Arbeitsstation zwischengelagert. Dadurch werden die Zerlegearbeiten nicht durch einen unter zusätzlichen Strahlenschutzmaßnahmen durchzuführenderi Transport der einzelnen abgetrennten Teile aus dem gefluteten Kernreaktordruckbehälter behindert.

Wenn die Arbeitstation nur einen Teil der horizontalen Innenquerschnittsfläche des Kernreaktordruckbehälters abdeckt und in unterschiedlichen Umfangspositionen angeordnet wird, ist ein einfacher Zugang zum gesamten unterhalb der Arbeitsstation befindlichen Innenraum des Kernreaktordruckbehälters möglich.

Hinsichtlich der Vorrichtung wird die Aufgabe gemäß der Erfindung gelöst mit einer Vorrichtung mit den Merkmalen des Patentanspruches 12, deren Vorteile ebenso wie die Vorteile der in den Unteransprüchen angegebenen Ausgestaltungen den zu den jeweils zugehörigen Verfahrensansprüchen angegebenen Vorteilen entsprechen.

Zur weiteren Erläuterung der Erfindung wird auf das Ausführungsbeispiel der Zeichnung verwiesen. Es zeigen:
- Fig. 1: eine Vorrichtung gemäß der Erfindung in Arbeitsposition im Inneren eines Kernreaktordruckbehälters eines Siedewasserreaktors in einem schematischen Schnittbild,
- Fig. 2: eine Draufsicht auf den geöffneten Reaktordruckbehälter mit einer darin angeordneten stationären Arbeitsstation,
- Fig. 3: eine schematische Prinzipdarstellung, mit einem in einen außerhalb des Kernreaktordruckbehälters befindlichen Zerlegebehälter eingebrachten ausgebauten Einbauteil.

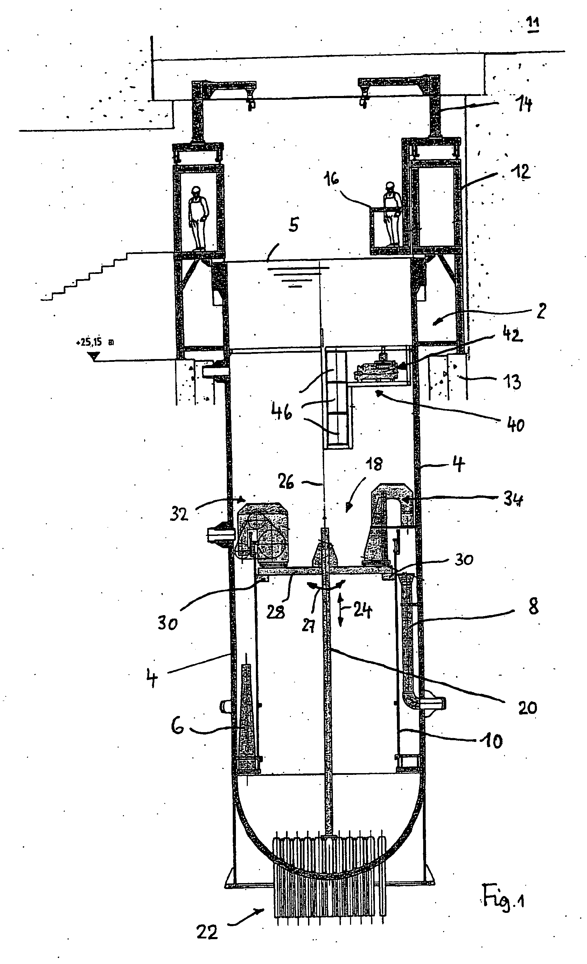

Gemäß Fig. 1 ist ein in einer Reaktorgrube 2 angeordnete Kernreaktordruckbehälter 4 eines Siedewasserreaktors geöffnet und bis zu seiner Oberkante 6 mit Wasser gefüllt. Aus dem Kernreaktordruckbehälter 4 sind in vorhergehenden Arbeitsschritten diejenigen Einbauteile entfernt worden, die mit vertretbarem Aufwand ausgebaut werden können. Dies sind beispielsweise oberes und unteres Kerngitter sowie der Kerndeckel. Im Kernreaktordruckbehälter 4 verbleiben weitere nicht oder nur aufwändig ausbaubare Einbauteile, von denen in der Figur beispielhaft ein Diffusor 6, ein Strahlpumpensteigrohr 8 und ein Kernmantel 10 dargestellt sind.

Auf die Stirn- oder Flanschfläche des geöffneten Kernreaktordruckbehälters 4 ist nach dem Entfernen der ausbaubaren Einbauteile unter dem Niveau des Bodens eines Absetzbeckens 11 eine begehbare Arbeitsbühne 12 abgesetzt worden, die sich zusätzlich an einem den Kernreaktordruckbehälter 4 umgebenden biologischen Schild 13 abstützt. Auf der Arbeitsbühne 12 ist ein Rundlaufkran 14 mit einem Fahrkorb 16 gelagert.

In den Kernreaktordruckbehälter 4 ist zum Zerlegen der im Kernreaktordruckbehälter 4 verbleibenden Einbauteile 6,8,10 eine Zerlegevorrichtung 18 eingebracht, die einen Tragmast 20 umfasst, der sich auf einem oder mehrere der im Boden des Kernreaktordruckbehälters 4 eingeschweißten Antriebsgehäuserohrstutzen 22 abstützt. Am Tragmast 20 ist axial in Pfeilrichtung 24 verschiebbar und um seine Längsmittenachse 26 drehbar (Doppelpfeil 27) ein Geräteträger 28 gelagert, der sich radial mit Stützrollen 30 am Innenumfang des Kernmantels 10 abstützt. Auf dem Geräteträger 28 sind als erste Trennwerkzeuge eine Bandsäge 32 für Horizontalschnitte sowie eine Stichsäge 34 für Vertikalschnitte angeordnet.

Oberhalb des Kernbereiches ist in den Kernreaktordruckbehälter 4 und mit hinreichender Wasserüberdeckung unterhalb des bis zur Oberkante 5 reichenden Wasserspiegels eine Arbeitsstation 40 beispielsweise in vorhandene Tragkonsolen von Einbauteilen, die vorher entfernt worden sind, eingehängt. In der Arbeitsstation 40 sind ein zweites mechanisches Trennwerkzeug 42 sowie eine in der Figur nicht sichtbare Presse zum Nachzerlegen bzw. Kompaktieren der vom nicht ausbaubaren Einbauteil 6,8,10 abgetrennten Teile angeordnet.

Die Arbeitstation 40 überdeckt nur einen Teilbereich der horizontalen Innenquerschnittsfläche ab und kann mit Hilfe des Rundlaufkrans 14 in Umfangsrichtung des Kernreaktordruckbehälters 4 umgesetzt, d. h, in unterschiedlichen Umfangspositionen angeordnet werden, um den Zugang zum gesamten unterhalb der Arbeitsstation befindlichen Innenraum des Kernreaktordruckbehälters 4 zu ermöglichen.

Die gegebenenfalls nachzerlegten und kompaktierten Teile werden in Lagerfässer 46 eingebracht, die in der Arbeitsstation 40 zwischengelagert werden. Mit anderen Worten: Die Arbeitsstation 40 verfügt über einen Lagerplatz für eine Mehrzahl von Lagerfässern und dient zugleich als Pufferlager für die vom nicht ausbaubaren Einbauteil 6,8,10 abgetrennten, gegebenenfalls nachzerlegten und kompaktierten Teile.

Vom Fahrkorb 16 der Arbeitsbühne 12 aus werden die mit den ersten und zweiten Trennwerkzeugen 32, 34 und 42 sowie die mit der Presse 44 durchgeführten Arbeiten sowie der mit Hilfe des Rundlaufkrans 14 durchgeführte Transport der abgetrennten Teile zur Arbeitsstation 40 und innerhalb der Arbeitsstation 40 gesteuert und überwacht.

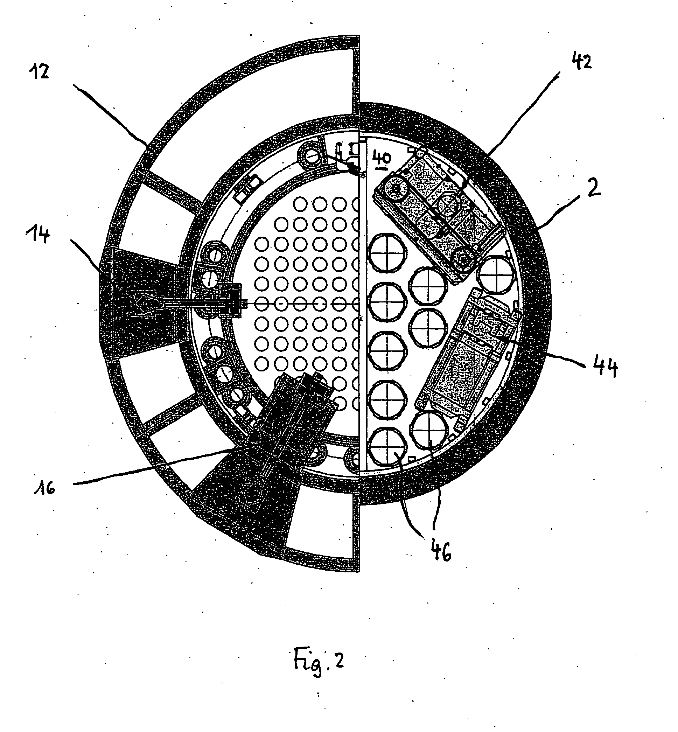

In der Draufsicht gemäß Fig. 2 ist die Arbeitsstation 40 mit dem in ihr angeordneten zweiten Trennwerkzeug 42, bei dem es sich ebenfalls um eine Bandsäge handelt, sowie die Presse 44 deutlich zu erkennen. Aus Gründen der Übersichtlichkeit ist die Arbeitsbühne mit dem Rundlaufkran 14 und dem Fahrkorb 16 nur in der linken Hälfte der Figur dargestellt. Aus Gründen der Übersichtlichkeit ist auch die unterhalb der Arbeitsstation 40 im Bereich des Kernmantels angeordnete Zerlegevorrichtung 18 (Fig.1) nicht dargestellt.

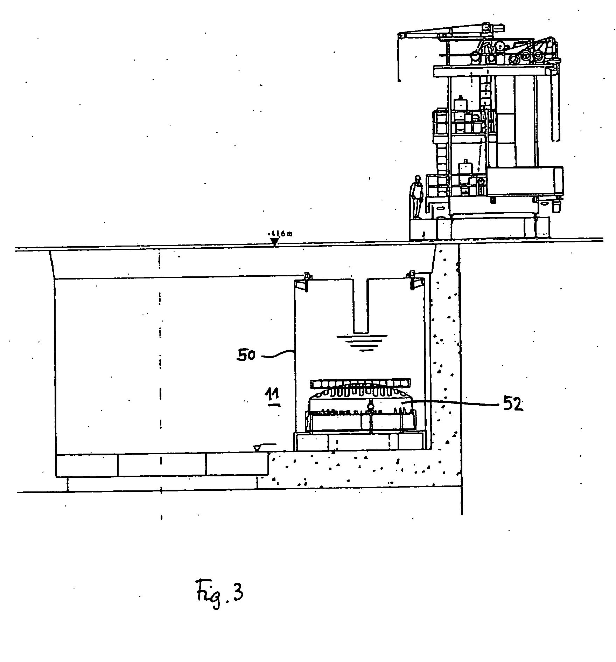

In Fig. 3 ist zu erkennen, dass im Absetzbecken 11 ein mit Wasser gefüllter Zerlegebehälter 50 angeordnet ist, in dem ein aus dem in der Figur nicht mehr dargestellten Kernreaktordruckbehälter entferntes Einbauteil, im Beispiel ein Kerndeckel 52, angeordnet ist. Dieser Kerndeckel 52 wird in dem Zerlegebehälter 50, bei dem es sich um einen für die Aufnahme eines Dampfabscheiders im Kernkraftwerk bereitgehaltenen Abschirmtopf handelt, mit einem Wasser-Abrasiv-Suspensions-Strahlverfahren zerlegt. In diesem Zerlegebehälter 50 werden mit der gleichen Technik auch andere ausbaubare Einbauteile, insbesondere das untere Kerngitter und das obere Kerngitter zertrennt.

### Bezugszeichenliste

- 2: Reaktorgrube
- 4: Kernreaktordruckbehälter
- 5: Oberkante
- 6: Diffusor
- 8: Strahlpumpensteigrohr
- 10: Kernmantel
- 11: Absetzbecken
- 12: Arbeitsbühne
- 13: Biologisches Schild
- 14: Rundlaufkran
- 16: Fahrkorb
- 18: Zerlegevorrichtung
- 20: Tragmast
- 22: Antriebsgehäuserohrstutzen
- 24: Pfeilrichtung
- 26: Längsachse
- 27: Doppelpfeil
- 28: Geräteträger
- 30: Stützrollen
- 32: Bandsäge
- 34: Stichsäge
- 40: Arbeitsstation
- 42: zweites Trennwerkzeug
- 44: Presse
- 46: Lagerfässer
- 50: Zerlegebehälter
- 52: Kerndeckel

## Patentansprüche

1. Verfahren zum Zerlegen eines Einbauteiles (6,8,10) eines Kernreaktordruckbehälters (4), bei dem das Einbauteil (6,8,10) im eingebauten Zustand innerhalb des geöffneten und bis zur Oberkante (6) gefluteten Kernreaktordruckbehälters (4) durch ein mechanisches Trennverfahren unter Wasser zertrennt wird
charakterisiert dadurch, dass die innerhalb des Kernreaktordruckbehälters (4) durchgeführten Zerlegearbeiten ausgehend von einer auf den Kernreaktordruckbehälter (4) abgesetzten, begehbaren Arbeitsbühne (12) gesteuert und überwacht werden.

2. Verfahren nach Anspruch 1, bei dem das mechanische Trennverfahren ein Sägeverfahren ist.

3. Verfahren nach Anspruch 1 oder 2, bei dem die vom Einbauteil (6,8,10) abgetrennten Teile (46) im Kernreaktordruckbehälter (4) mit einem mechanischen Trennverfahren nachzerlegt werden.

4. Verfahren nach einem der vorhergehenden Ansprüche, bei dem zumindest ein Teil der ausbaubar im Kernreaktordruckbehälter (4) eingebauten Einbauteile (52) ausgebaut werden und in einem außerhalb des Kernreaktordruckbehälters (4) befindlichen Zerlegebehälter (50) unter Wasser zertrennt werden.

5. Verfahren nach Anspruch 4, bei dem die ausgebauten Einbauteile (52) mit einem Wasser-Abrasiv-Suspensions-Verfahren zertrennt werden.

6. Verfahren nach Anspruch 4 oder 5, bei dem bei einem Kernreaktordruckbehälter (4) eines Siedewasserreaktors nach dem Ausbau eines Kerndeckels (52) und einer oberen und unteren Kerngitterplatte in den Kernreaktordruckbehälter (4) eine Zerlegevorrichtung (18) eingebracht wird, die einen Tragmast (20) umfasst, der sich zumindest mittelbar am Boden des Kernreaktordruckbehälters (4) abstützt, und an dem axial verschiebbar ein um die Längsachse (26) des Tragmastes (20) drehbar gelagerter Geräteträger (28) angeordnet ist, der sich am Kernmantel (10) radial abstützt und wenigstens ein erstes mechanisches Trennwerkzeug (32,34) trägt.

7. Verfahren nach Anspruch 6, bei dem in den Kernreaktordruckbehälter (4) oberhalb des Kernbereichs unter Wasser eine Arbeitsstation (40) eingebracht wird, in der mit dem ersten Trennwerkzeug vom Einbauteil (6,8,10) abgetrennte Teile mit zumindest einem zweiten mechanischen Trennwerkzeug (42) nachzerlegt werden.

8. Verfahren nach Anspruch 7, bei dem die abgetrennten und gegebenenfalls nachzerlegten Teile in der Arbeitsstation (40) kompaktiert werden.

9. Verfahren nach Anspruch 7 oder 8, bei dem die abgetrennten, gegebenenfalls nachzerlegten und kompaktierten Teile in der Arbeitstation (40) gelagert werden.

10. Verfahren nach Anspruch 9, bei dem die abgetrennten, gegebenenfalls nachzerlegten und kompaktierten Teile in Lagerfässer (46) eingebracht werden, die in der Arbeitsstation (40) zwischengelagert werden.

11. Verfahren nach Anspruch 7 oder 8, bei der die Arbeitstation (40) nur einen Teil der horizontalen Innenquerschnittsfläche des Kernreaktordruckbehälters (4) abdeckt und in unterschiedlichen Umfangspositionen angeordnet wird.

12. Vorrichtung zum Zerlegen eines Einbauteiles (6,8,10) eines Kernreaktordruckbehälters (4), mit einer im Kernreaktordruckbehälter abgestützten Zerlegevorrichtung (18, die wenigstens ein erstes mechanisches Trennwerkzeug (32,34) umfasst,
charakterisiert durch eine auf den bis zur Oberkante (5) gefluteten Kernreaktordruckbehälter (4) abgesetzte begehbare Arbeitsbühne (12).

13. Vorrichtung nach Anspruch 12, bei der die Zerlegevorrichtung (18) einen Tragmast (20) umfasst, der sich zumindest mittelbar am Boden des Kernreaktordruckbehälters (4) abstützt, und an dem axial verschiebbar ein um seine Längsachse (26) drehbar gelagerter Geräteträger (28) angeordnet ist, der sich an einem Kernmantel (10) radial abstützt und wenigstens das erste mechanische Trennwerkzeug trägt.

14. Vorrichtung nach Anspruch 12 oder 13, bei dem das erste mechanische Trennwerkzeug (32,34) eine Säge ist.

15. Vorrichtung nach einem der Ansprüche 12 bis 14, mit einer im Kernreaktordruckbehälter (4) in unterschiedlichen Umfangspositionen positionierbaren Arbeitsstation (40), die nur einen Teil der horizontalen Innenquerschnittsfläche des Kernreaktordruckbehälters (4) abdeckt, und in der zumindest ein zweites mechanischen Trennwerkzeug (42) angeordnet ist.

16. Vorrichtung nach Anspruch 15, bei der in der Arbeitsstation (40) eine Presse (44) angeordnet ist.

17. Vorrichtung nach einem der Ansprüche 12 bis 16, bei der die Arbeitsbühne (12) einen Rundlaufkran (14) umfasst.

## Claims

1. Method for dismantling an internal component (6, 8, 10) of a nuclear reactor pressure vessel (4), wherein the internal component (6, 8, 10) is separated underwater by a mechanical separating method in a fitted state within the nuclear reactor pressure vessel (4) that is open and flooded up to the upper edge (6),
**characterised in that**,
the dismantling operation that takes place within the nuclear reactor pressure vessel (4) is controlled and monitored from an accessible work platform (12) that is at a distance to the nuclear reactor pressure vessel (4).

2. Method according to claim 1, wherein the mechanical separating method is a sawing method.

3. Method according to claim 1 or 2, wherein the parts (46) that are separated from the internal component (6, 8, 10) are further dismantled in the nuclear reactor pressure vessel (4) by means of a mechanical separating method.

4. Method according to one of the preceding claims, wherein at least one part of the removable, fitted internal components (52) in the nuclear reactor pressure vessel (4) are removed and then dismantled underwater in a dismantling chamber (50) located outside of the nuclear reactor pressure vessel (4).

5. Method according to claim 4, wherein the removed internal components (52) are dismantled using a water-abrasive-suspension method.

6. Method according to claim 4 or 5, wherein a dismantling device (18) is introduced into the nuclear reactor pressure vessel (4) in a nuclear reactor pressure vessel (4) of a boiling-water reactor after a core lid (52) and an upper and lower core lid plate have been removed, said dismantling device comprising a bearing mast (20) that is at least indirectly shored to the base of the nuclear reactor pressure vessel (4), and on which an equipment carrier (28) that is mounted rotatably around the longitudinal axis (26) of the bearing mast (20) is arranged in an axially displaceable manner, which is shored radially on the core shroud (10) and which bears at least one first mechanical separating tool (32, 34).

7. Method according to claim 6, wherein a work station (40) is introduced into the nuclear reactor pressure vessel (4) underwater above the core area, in which parts separated from the internal component (6, 8, 10) using the first separating tool are further dismantled using at least one second mechanical separating tool (42).

8. Method according to claim 7, wherein the separated and, if necessary, further dismantled parts are compacted in the work station (40).

9. Method according to claim 7 or 8, wherein the separated, if necessary further dismantled and compacted parts are stored in the work station (40).

10. Method according to claim 9, wherein the separated, if necessary further dismantled and compacted parts are introduced into storage barrels (46), which are stored temporarily in the work station (40).

11. Method according to claim 7 or 8, wherein the work station (40) only covers one part of the horizontal internal cross-sectional surface of the nuclear reactor pressure vessel (4) and is arranged in different circumferential positions.

12. Device for dismantling an internal component (6, 8, 10) of a nuclear reactor pressure vessel (4), having a dismantling device (18) shored in the nuclear reactor pressure vessel that comprises at least one first mechanical separating tool (32, 34),
**characterised by**,
an accessible work platform (12) that is at a distance to the nuclear reactor pressure vessel (4) that is flooded up to the upper edge (5).

13. Device according to claim 12, wherein the dismantling device (18) comprises a bearing mast (20), which is shored at least indirectly on the base of the nuclear reactor pressure vessel (4), and on which an equipment carrier (28) that is mounted rotatably around its longitudinal axis (26) is arranged in an axially displaceable manner, which is shored radially to a core shroud (10) and which bears at least the first mechanical separating tool.

14. Device according to claim 12 or 13, wherein the first mechanical separating tool (32, 34) is a saw.

15. Device according to one of claims 12 to 14, having a work station (40) that can be positioned in the nuclear reactor pressure vessel (4) in various circumferential positions, which only covers one part of the horizontal internal cross-sectional surface of the nuclear reactor pressure vessel (4), and in which at least one second mechanical separating tool (42) is arranged.

16. Device according to claim 15, wherein a compactor (44) is arranged in the work station (40).

17. Device according to one of claims 12 to 16, wherein the work platform (12) comprises a rotating crane (14).

## Revendications

1. Procédé de désassemblage d'un élément interne (6, 8, 10) d'une cuve sous pression de réacteur nucléaire (4), pour lequel l'élément interne (6, 8, 10) est séparé sous eau à l'état d'interne à l'intérieur de la cuve sous pression de réacteur nucléaire (4) ouverte et noyée jusqu'au bord supérieur (6), par un procédé de séparation mécanique, **caractérisé en ce que** les travaux de désassemblage exécutés à l'intérieur de la cuve sous pression de réacteur nucléaire (4) sont pilotés et contrôlés à partir d'une plateforme de travail (12) accessible, déposée sur la cuve sous pression de réacteur nucléaire (4).

2. Procédé selon la revendication 1, pour lequel le procédé de séparation mécanique est un procédé de sciage.

3. Procédé selon la revendication 1 ou 2, pour lequel les parties (46) séparées de l'élément interne (6, 8, 10) sont redémontées dans la cuve sous pression de réacteur nucléaire (4) avec un procédé de séparation mécanique.

4. Procédé selon une quelconque des revendications précédentes, pour lequel une partie au moins des éléments internes (52) montés de façon démontable dans la cuve sous pression de réacteur nucléaire (4) est démontée et séparée sous eau dans un caisson de désassemblage (50) se trouvant en dehors de la cuve sous pression de réacteur nucléaire (4).

5. Procédé selon la revendication 4, pour lequel les éléments internes (52) déposés sont séparés par un procédé à abrasif en suspension dans l'eau.

6. Procédé selon la revendication 4 ou 5 pour lequel pour une cuve sous pression de réacteur nucléaire (4) d'un réacteur à eau bouillante on met en place dans la cuve sous pression de réacteur nucléaire (4) après la dépose d'un couvercle coeur (52) et d'un sommier supérieur et inférieur un dispositif de désassemblage (18) qui comprend un mât porteur (20) qui s'appuie au moins indirectement au fond de la cuve sous pression de réacteur nucléaire (4) et sur lequel est disposé de façon mobile dans le sens axial un porte-appareils (28) monté pivotant autour de l'axe longitudinal (26) du mât porteur (20), qui s'appuie dans le sens radial sur l'enveloppe du coeur (10) et porte au moins un premier outil de séparation (32, 34) mécanique.

7. Procédé selon la revendication 6 pour lequel est mis en place, sous l'eau au-dessus de la zone du coeur dans la cuve sous pression de réacteur nucléaire (4), un poste de travail (40), dans lequel les parties de l'élément interne (6, 8, 10) séparées avec le premier outil de séparation sont redémontées avec au mois un deuxième outil de séparation (42) mécanique.

8. Procédé selon la revendication 7 pour lequel les parties séparées et le cas échéant redémontées sont compactées dans le poste de travail (40).

9. Procédé selon la revendication 7 ou 8 pour lequel les parties séparées, le cas échéant redémontées et compactées sont stockées dans le poste de travail (40).

10. Procédé selon la revendication 9 pour lequel les parties séparées, le cas échéant redémontées et compactées sont déposées dans des fûts de stockage (46) qui sont provisoirement stockées dans le poste de travail (40).

11. Procédé selon la revendication 7 ou 8 pour lequel le poste de travail (40) ne couvre qu'une partie de la surface transversale intérieure horizontale de la cuve sous pression de réacteur nucléaire (4) et est disposé dans différentes positions périphériques.

12. Dispositif pour démonter un élément interne (6, 8, 10) d'une cuve sous pression de réacteur nucléaire (4) avec un dispositif de désassemblage (18) appuyé dans la cuve sous pression de réacteur nucléaire, qui comprend au moins un premier outil de séparation mécanique (32, 34) **caractérisé en ce qu'**il comporte une plateforme de travail (12) accessible déposée sur la cuve sous pression de réacteur nucléaire (4) noyée jusqu'au bord supérieur (5).

13. Dispositif selon la revendication 12 pour lequel le dispositif de désassemblage (18) comprend un mât porteur (20) qui s'appuie au moins indirectement sur le fond de la cuve sous pression de réacteur nucléaire (4) et sur lequel est disposé mobile dans le sens axial un porte-appareils (28) monté pivotant autour de son axe longitudinal (26), qui s'appuie dans le sens radial sur une enveloppe de coeur (10) et porte au moins le premier outil de séparation mécanique.

14. Dispositif selon la revendication 12 ou 13 pour lequel le premier outil de séparation mécanique (32 ,34) est une scie.

15. Dispositif selon une quelconque des revendications 12 à 14 avec un poste de travail (40) positionnable dans différentes positions périphériques dans la cuve sous pression de réacteur nucléaire (4), qui ne couvre qu'une partie de la surface transversale intérieure horizontale de la cuve sous pression de réacteur nucléaire (4) et dans lequel est disposé au moins un deuxième outil de séparation mécanique (42).

16. Dispositif selon la revendication 15 pour lequel une presse (44) est disposée dans le poste de travail (40).

17. Dispositif selon une quelconque des revendications 12 à 16 pour lequel la plateforme de travail (12) comprend un pont roulant circulaire (14).
